# EUROPÄISCHE PATENTSCHRIFT

(11) **EP 3 777 752 B1**
(45) Veröffentlichungstag und Bekanntmachung des Hinweises auf die Patenterteilung: **06.04.2022**
(21) Anmeldenummer: 20189433.4
(22) Anmeldetag: 04.08.2020
(51) Int. Cl.: A61C 7/10

(54) **ORTHODONTISCHE DEHNSCHRAUBE**
ORTHODONTIC EXPANSION SCREW
VIS D'EXPANSION ORTHODONTIQUE

(30) Priorität: 13.08.2019 DE 102019121790
(43) Veröffentlichungstag der Anmeldung: 17.02.2021
(73) Patentinhaber: Bernhard Förster GmbH, 75172 Pforzheim (DE)
(72) Erfinder: Regelmann, Michael, 75245 Neulingen (DE)
(74) Vertreter: Twelmeier Mommer & Partner

(56) Entgegenhaltungen:
- DE-A1- 2 722 611
- US-A- 4 354 832
- US-A- 4 379 693
- US-A1- 2007 275 341

## Beschreibung

Die Erfindung geht von einer orthodontischen Dehnschraube.

Eine solche Dehnschraube ist in der DE 10 2007 002 040 B4 oder US 4 379 693 A offenbart.

Zum Erschweren eines unbeabsichtigten Verdrehens der Spindel hat deren Betätigungsteil bei der bekannten Dehnschraube einen von der Kreisform abweichenden Außenquerschnitt. Ein Metallband drückt in radialer Richtung auf den Betätigungsteil und wirkt dadurch als Reibungsbremse für die Spindel, welche die Spindel in jenen Winkelstellungen hält, in welchen wegen der von der Kreisform abweichenden Gestalt des Betätigungsteils das Metallband den geringsten Abstand von der Längsachse der Spindel einnimmt. Das Metallband ist bei der bekannten Dehnschraube mit ihren Enden an den beiden Geradführungsmitteln befestigt, insbesondere verschweißt. Das Metallband erzeugt eine wohldefinierte Hemmung, jedoch hat diese Lösung den Nachteil, ein Bauteil zu erfordern, welches an den beiden Geradführungsmitteln befestigt werden muss, welche bei der bekannten Dehnschraube als zylindrische Stifte ausgebildet sind.

Aus der DE 10 2007 002 040 B4 ist es weiterhin bekannt, eine Hemmung dadurch zu verwirklichen, dass das Innengewinde des Dehnschraubenkörpers, in die ein Gewindeteil der Spindel eingreift, ein wenig gequetscht wird. Dadurch wird zwar ein gesondertes Bauteil vermieden, aber es ist nachteilig, dass sich das Ausmaß der auf diese Weise erzeugten Hemmung nur schwer reproduzieren lässt, so dass es innerhalb einer Serie von Dehnschrauben erhebliche Unterschiede in der Hemmung gibt.

Dokument US 4 379 693 A offenbart auch eine orthodontische Dehnschraube mit zwei Körpern, deren gegenseitiger Abstand mittels einer Spindel veränderbar ist, die an beiden Körpern angreift, wobei die Spindel ein Betätigungsteil aufweist, von welchem zwei gegenüberliegende Gewindeteile ausgehen, welche in eine Gewindebohrung der beiden Körper gedreht sind, wobei die Körper ein erstes Ende haben, welches dem Betätigungsteil der Spindel zugewandt ist, mit Geradführungsmitteln, die mit beiden Körpern in Eingriff stehen und sie unter Vermeidung einer Relativdrehung der Körper beim Verändern ihres gegenseitigen Abstands entlang zweier zueinander paralleler Führungsachsen führen, und wobei ein Körper, außen an seinem ersten Ende einen federnden Fortsatz hat, welcher gegen das Gewinde eines der Gewindeteile drückt, zum Verhindern oder Erschweren eines unbeabsichtigten Verdrehens der Spindel relativ zu den Körpern.

Der vorliegenden Erfindung liegt die Aufgabe zugrunde, einen Weg aufzuzeigen, wie in einer orthodontischen Dehnschraube eine gut reproduzierbare Hemmung der Spindel in vorgegebenen Stellungen der Spindel ohne ein die Spindel überspannendes Metallband verwirklicht werden kann.

Diese Aufgabe wird durch eine orthodontische Dehnschraube mit den im Patentanspruch 1 angegebenen Merkmalen gelöst.

Eine auf dem gleichen Prinzip beruhende zweite Lösung der Aufgabe ist im Patentanspruch 2 angegeben.

Vorteilhafte Weiterbildungen der Erfindung sind Gegenstand der abhängigen Ansprüche.

Die Lösung gemäß dem Patentanspruch 1 erreicht eine wohldefinierte Hemmung der Spindel ohne ein den Betätigungsteil der Spindel überspannendes Metallband und vermeidet den für dessen Montage anfallenden Aufwand. Erreicht wird das dadurch, dass der wenigstens eine Gewindeteil der Spindel wenigstens eine sich in deren Längsrichtung erstreckende und in radialer Richtung offene Ausnehmung aufweist und dass der Körper, in welchem der wenigstens eine Gewindeteil der Spindel steckt, an seiner Außenseite einen federnden Fortsatz hat, welcher am ersten Ende der Körpers angeordnet ist, welcher dem Betätigungsteil der Spindel zugewandt ist, oder an seinem zweiten Ende angeordnet ist, welches dem Betätigungsteil der Spindel zugewandt ist. Im Rahmen der Erfindung ist es auch möglich, dass sowohl am ersten Ende als auch am zweiten Ende jeweils ein federnder Fortsatz angeordnet ist. Der jeweilige Fortsatz ist gegen den wenigstens einen Gewindeteil gerichtet und ragt in einer Stellung der Spindel, in welcher der federnde Fortsatz der wenigstens einen Ausnehmung im Gewindeteil der Spindel zugewandt ist, in die Ausnehmung hinein, wohingegen er in Stellungen der Spindel, in welchen er keiner Ausnehmung im Gewindeteil zugewandt ist, federnd gegen das Gewinde des wenigstens einen Gewindeteils der Spindel drückt. Die gewollte Hemmung der Spindel erfolgt entgegen der Lehre der DE 10 2007 002 040 B4 nicht durch Krafteinwirkung unmittelbar auf das Betätigungsteil - den Spindelkopf -, sondern durch unmittelbare Einwirkung auf den Gewindeteil der Spindel. Um die gewolllte Hemmung der Spindel zu erzielen, muss der federnde Fortsatz an keinem der Geradeführungsmitteln befestigt sein, er muss auch nicht mit gleichbleibender Kraft gegen das Gewinde der Spindel drücken und er muss der Spindeldrehung keine gleichbleibende Reibungskraft entgegensetzen. Stattdessen kommt die Hemmung der Spindel dadurch zustande, dass der federnde Fortsatz in die im Gewindeteil der Spindel ausgebildete Ausnehmung ragt. In der Ausnehmung muss der federnde Fortsatz nicht auf den Gewindeteil der Spindel drücken, vorzugsweise tut er es jedoch, und zwar weniger stark als wenn er außerhalb der Ausnehmung gegen das Gewinde der Spindel drückt. Infolgedessen steigt die Kraft, welche aufgebracht werden muss, um die Hemmung der Spindel zu überwinden, beim Drehen der Spindel progressiv an, bis der federnde Fortsatz die Ausnehmung verlassen hat. Durch das Ausbilden der Ausnehmung hat das Gewinde von wenigstens einem Gewindeteil der Spindel keinen gleichbleibenden Außendurchmesser mehr.

Nicht beide Körper der Dehnschraube müssen einen erfindungsgemäßen federnden Fortsatz haben. Wenn aber beide Körper einen erfindungsgemäßen federnden Fortsatz haben, dann haben auch beide Gewindeteile der Spindel wenigstens eine Ausnehmung, in welche der jeweilige federnde Fortsatz ragen kann.

Durch die Erfindung wird eine wohldefinierte und reproduzierbare Hemmung in Stellungen der Spindel erzielt, welche von der Lage der Ausnehmung im Gewindeteil abhängen.

Die erfindungsgemäße Dehnschraube hat wenigstens zwei Körper, deren gegenseitiger Abstand durch eine Spindel veränderbar ist. Es gibt aber auch orthodontische Dehnschrauben, die nicht nur ein einziges Paar von Körpern aufweisen, deren gegenseitiger Abstand durch eine Spindel verändert werden kann, sondern die zwei oder drei Paare von Körpern haben, deren gegenseitiger Abstand jeweils durch eine gesonderte, zweite bzw. dritte, Spindel veränderbar ist. Eine solche Dehnschraube wird als Mehrsektorenschraube bezeichnet. In ihr sind die zwei oder drei Paare von Körpern zu einer Baugruppe verbunden. Der Schutz der Patentansprüche 1 und 2 soll Mehrsektorenschrauben einschließen. Deshalb ist in den Patentansprüchen 1 und 2 angegeben, dass die orthodontische Dehnschraube "wenigstens zwei Körper" hat.

Die im Patentanspruch 2 angegebene Lösung unterscheidet sich von der im Patentanspruch 1 angegebenen Lösung dadurch, dass wenigstens ein Gewindeteil der Spindel anstelle einer sich in Längsrichtung erstreckenden und in radialer Richtung offenen Ausnehmung eine sich in der Längsrichtung der Spindel erstreckende Abflachung aufweist. Der federnde Fortsatz, welcher an einem Ende des Körpers angeordnet ist, in welchem sich der abgeflachte Gewindeteil der Spindel befindet, ist in denjenigen Stellungen der Spindel, in welchen deren Hemmung möglich sein soll, gegen die Abflachung gerichtet. Wenn die Spindel aus einer solchen gehemmten Stellung heraus, in welcher der federnde Fortsatz, bezogen auf die Umfangsrichtung der Spindel, gegen die Mitte der Abflachung gerichtet ist, absichtlich verdreht wird, dann türmt sich der Rand der sich am federnde Fortsatz vorbeidrehenden Abflachung vor dem Fortsatz auf, bis dieser auf den nicht abgeflachten Abschnitt des Gewindes gleitet. Dem entsprechend steigt die Kraft, welche aufgebracht werden muss, um den federnden Fortsatz entgegen seiner Federkraft zu biegen und dadurch die Hemmung der Spindel zu überwinden, ebenso wie bei der Lösung gemäß dem Patentanspruch 1 progressiv an, bis der federnde Fortsatz den abgeflachten Bereich des Gewindeteils verlassen hat. Auch mit der zweiten Lösung der Aufgabe, welche der Erfindung zugrunde liegt, erzielt man eine definierte und reproduzierbare Hemmung, weil das Gewinde von wenigstens einem Gewindeteil der Spindel keinen gleichbleibenden Außendurchmesser hat, sondern von einem gleichbleibenden Außendurchmesser um ein vorgebbares Maß abweicht.

Wenn die orthodontische Dehnschraube eine Spindel mit zwei Gewindeteilen hat, welche in einander entgegengesetzte Richtungen vom Betätigungsteil ausgehen, dann können beide Körper der Dehnschraube einen federnden Fortsatz und beide Gewindeteile der Spindel eine sich in Längsrichtung der Spindel erstreckende Ausnehmung oder Abflachung haben. Grundsätzlich genügt es jedoch, wenn lediglich eines der Gewindeteile der Spindel eine Ausnehmung oder eine Abflachung hat und dementsprechend nur einer der beiden Körper der Dehnschraube einen federnden Fortsatz oder mehr als einen federnden Fortsatz aufweist.

Außerhalb der Ausnehmung oder Abflachung des Gewindeteils der Spindel soll der federnde Fortsatz auf das Gewinde des Gewindeteils drücken. Vorzugsweise berührt der federnde Fortsatz die Spindel in jeder ihrer Stellungen. In der Ausnehmung bzw. auf der Abflachung berührt der federnde Fortsatz die Spindel jedoch mit geringerem Druck oder drucklos, weil der Boden der Ausnehmung und die Abflachung von der Längsachse der Spindel einen geringeren Abstand haben als der radial äußere Rand des Gewindes. Wenn der federnde Fortsatz gegen die Längsmittellinie der Oberfläche der Ausnehmung oder Abflachung gerichtet ist, muss er diese nicht berühren. Wenn jedoch der federnde Fortsatz in jeder Stellung der Spindel federnd gegen deren Gewindeteil drückt, dann hat das den Vorteil, dass die Spindel auch dann, wenn der Fortsatz federnd gegen die Abflachung oder in die Ausnehmung drückt, kein Spiel hat.

Die Erfindung ist nicht auf eine besondere Art des Gewindes beschränkt.

Um das Gleiten des federnde Fortsatzes auf dem Gewindeteil der Spindel zu erleichtern, ist die Oberfläche des Fortsatzes, mit welcher er die Spindel berührt, vorzugsweise konvex ausgebildet und erstreckt sich in Längsrichtung der Spindel vorzugsweise über eine Länge, die größer ist als die Steigung des Gewindes der Spindel.

Die Ausnehmung bzw. Abflachung erstreckt sich auf dem Gewindeteil der Spindel zweckmäßigerweise über eine Länge, die ebenso lang ist wie die Länge, um welche die Körper der Dehnschraube durch Drehen der Spindel verstellt werden können. Vorzugsweise erstrecken sich die Ausnehmung bzw. die Abflachung über die gesamte Länge des wenigstens einen Gewindeteils bzw. beider Gewindeteile.

Auf dem jeweiligen Gewindeteil kann mehr als nur eine Ausnehmung oder Abflachung vorhanden sein. Je mehr Ausnehmungen oder Abflachungen in Umfangsrichtung verteilt auf dem Gewindeteil oder den Gewindeteilen der Spindel vorhanden sind, umso mehr Stellungen der Spindel gibt es, in denen das unabsichtliche Verdrehen der Spindel verhindert oder erschwert werden kann. Vorzugsweise sind zwei einander diametral gegenüberliegende Ausnehmungen oder Abflachungen vorhanden oder vier Ausnehmungen oder Abflachungen, welche einander paarweise diametral gegenüberliegen. Sind zwei Ausnehmungen oder Abflachungen vorhanden, dann kann die Stellung der Spindel nach jeweils einer halben Umdrehung in einer Stellung verharren, in welcher ein unbeabsichtigtes Verdrehen der Spindel verhindert oder erschwert ist. Wenn vier Ausnehmungen oder Abflachungen auf dem Gewindeteil vorhanden sind, dann gelingt das bereits nach jeweils einer viertel Umdrehung. In diesem Fall hat das Gewindeteil die Gestalt eines Vierkants mit abgerundeten Kanten, in deren Rundungen die verbliebenen Gewindegänge der Spindel liegen. Je nach der konkreten Ausbildung der Abflachung oder Ausnehmung können sich die Gewindegänge mit abnehmender Gewindetiefe bis in die Abflachung bzw. Ausnehmung hinein erstrecken. Das ist auch bevorzugt, um sicherzustellen, dass zwischen dem Gewindeteil und der ihn aufnehmenden Gewindebohrung ein hinreichender Eingriff zwischen diesen besteht, um die bei der orthodontischen Behandlung in der Dehnschraube auftretenden Kräfte aufzunehmen bzw. zu übertragen.

Die Möglichkeit, die Spindel nach jeder Vierteldrehung in einer Stellung zu halten, in welcher ein unbeabsichtigtes Verdrehen der Spindel verhindert oder erschwert ist, lässt sich auch erreichen, wenn die Gewindeteile der Spindel nur zwei einander diametral gegenüberliegende Ausnehmungen oder Abflachungen haben, nämlich dann, wenn die Ausnehmungen bzw. Abflachungen auf dem einen Gewindeteil relativ zu den Ausnehmungen bzw. Abflachungen auf dem anderen Gewindeteil der Spindel um einen Umfangswinkel von 90° gegeneinander versetzt sind und an beiden Körpern der Dehnschraube wenigstens ein federnder Fortsatz vorhanden ist.

In der Dehnschraube können an einem oder beiden Körpern mehrere federnde Fortsätze vorgesehen sein, und zwar entweder an einem Ende des Körpers in diametraler Anordnung oder an beiden Enden des Körpers. Ein Vorteil dieser Maßnahme wäre, dass auch bei einem eventuellen Federbruch noch immer eine Spindelhemmung gewährleistet wäre. Wegen des damit verbundenen Aufwands ist es jedoch nicht bevorzugt, mehr als einen federnden Fortsatz an einem Körper der Dehnschraube zu haben.

Der an dem einen Körper oder an beiden Körpern der Dehnschraube vorhandene federnde Fortsatz ist vorzugsweise als eine Blattfeder ausgebildet. Eine solche Blattfeder kann reproduzierbar und mit geringen Maßtoleranzen durch einen Stanz- und Prägevorgang aus einem Federblech oder Federband erzeugt werden. Bevorzugt ist ein Ende der Blattfeder am äußeren Umfang des wenigstens einen Körpers angebracht ist. Beispielsweise kann das an dem wenigstens einen Körper angebrachte Ende der Blattfeder in einer Nut des wenigstens einen Körpers liegen.

Bei einer erfindungsgemäßen Dehnschraube ist die zum Verhindern oder Erschweren des Verdrehens vorgesehene Einrichtung bevorzugt derart ausgebildet, dass sie in beiden Drehrichtungen der Spindel wirksam ist.

Ausführungsbeispiele der erfindungsgemäßen Dehnschraube sind in den beigefügten Zeichnungen schematisch dargestellt. Gleiche oder einander entsprechende Teile der Dehnschrauben sind mit übereinstimmenden Bezugszahlen bezeichnet.
Figur 1 zeigt eine erste Dehnschraube in einer Draufsicht mit einer Spindel mit zwei Gewindeteilen, von denen einer vier Abflachungen hat, die einander paarweise diametral gegenüberliegen, mit der Spindel in einer Sperrstellung,
Figur 2 zeigt den Längsschnitt A-A durch die Dehnschraube,
Figur 3 zeigt eine Draufsicht auf die Dehnschraube mit der Spindel in einer Schaltstellung,
Figur 4 zeigt den Längsschnitt B-B durch die Dehnschraube,
Figur 5 zeigt den Querschnitt C-C durch die Dehnschraube,
Figur 6 zeigt den Querschnitt D-D durch die Dehnschraube,
Figur 7 zeigt als Detail die Spindel der ersten Dehnschraube in einer Draufsicht, in einer Stellung wie in Figur 1,
Figur 8 zeigt als Detail die Spindel der ersten Dehnschraube in einer Draufsicht, jedoch in einer Stellung wie in Figur 3,
Figur 9 zeigt eine zweite Dehnschraube in einer Draufsicht mit einer Spindel mit zwei Gewindeteilen, von denen einer vier Ausnehmungen hat, die einander paarweise gegenüberliegen, mit der Spindel in einer Sperrstellung,
Figur 10 zeigt den Längsschnitt A-A durch die Dehnschraube aus Figur 9,
Figur 11 zeigt eine Draufsicht auf die Dehnschraube aus Figur 8 mit der Spindel in einer Schaltstellung,
Figur 12 zeigt den Längsschnitt B-B durch die Dehnschraube aus Figur 10,
Figur 13 zeigt den Querschnitt C-C durch die Dehnschraube aus Figur 9,
Figur 14 zeigt den Querschnitt D-D durch die Dehnschraube aus Figur 11,
Figur 15 zeigt als Detail eine Draufsicht der Spindel der zweiten Dehnschraube in einer Stellung wie in Figur 9
Figur 16 zeigt als Detail eine Draufsicht der Spindel aus Figur 15, jedoch in einer Stellung wie in Figur 11,
Figur 17 zeigt eine dritte Dehnschraube in einer Draufsicht, bei welcher die Spindel zwei Gewindeteile hat, von denen jedes zwei einander diametral gegenüberliegende Ausnehmungen hat, wobei die Ausnehmungen im einen Gewindeteil gegenüber den Ausnehmungen im anderen Gewindeteil um einen Winkel von 90° versetzt sind, und sich die Spindel mit einem ihrer beiden Gewindeteile in einer Sperrstellung befindet,
Figur 18 zeigt den Längsschnitt A-A durch die Dehnschraube aus Figur 17,
Figur 19 zeigt eine Draufsicht auf die Dehnschraube aus Figur 17, wobei die Spindel aus der in Figur 17 gezeigten Stellung um 90° verdreht ist,
Figur 20 zeigt den Längsschnitt B-B durch die Dehnschraube aus Figur 19,
Figur 21 zeigt den Querschnitt C-C durch die Dehnschraube aus Figur 17,
Figur 22 zeigt den Querschnitt D-D durch die Dehnschraube aus Figur 19,
Figur 23 zeigt als Detail die Spindel der dritten Dehnschraube in einer Draufsicht, in einer Stellung wie in Figur 17,
   und
Figur 24 zeigt als Detail die Spindel der dritten Dehnschraube in einer Draufsicht, jedoch in einer Stellung wie in Figur 19.

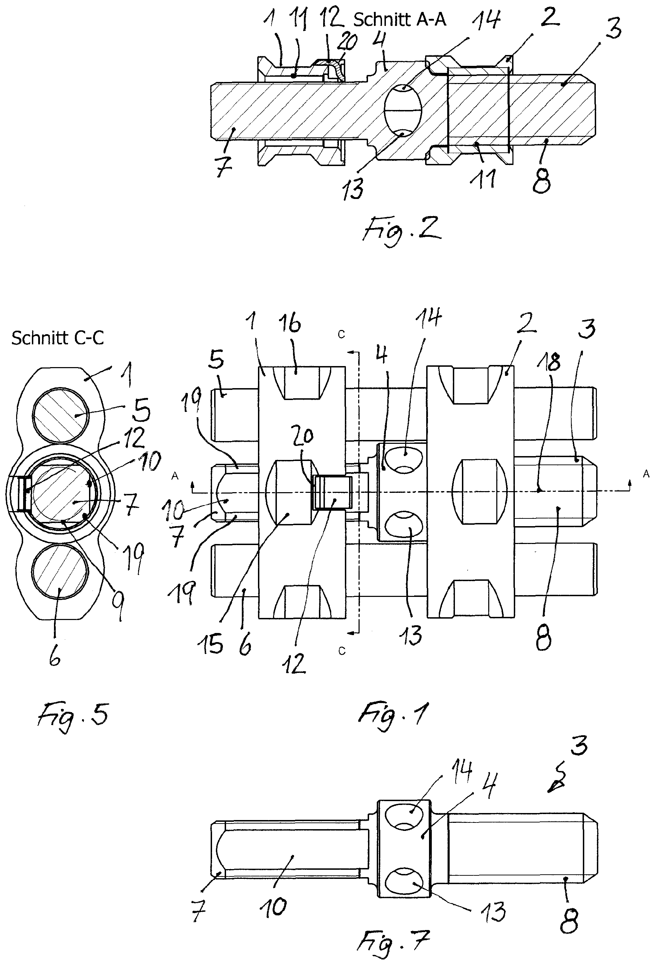

Die in den Figuren 1 bis 8 dargestellte erste Dehnschraube hat zwei vorzugsweise gleich oder im Wesentlichen gleich ausgebildete Körper 1 und 2, deren gegenseitiger Abstand mittels einer Spindel 3 veränderbar ist, die mittig einen Betätigungsteil 4 hat, von welchem in einander entgegengesetzten Richtungen zwei Gewindeteile 7 und 8 mit entgegengesetztem Windungssinn ausgehen. Der erste Gewindeteil 7 ist im ersten Körper 1 und der zweite Gewindeteil 8 ist im zweiten Körper 2 drehbar gelagert. Zu diesem Zweck befindet sich in jedem der beiden Körper 1 und 2 eine durchgehende Gewindebohrung 11, in welche jeweils einer der beiden Gewindeteile 7 und 8 gedreht ist. Dementsprechend fluchten die beiden Gewindebohrungen 11 miteinander und haben, den beiden Gewindeteilen 7 und 8 entsprechend, entgegengesetzten Windungssinn. Die der Gewinde auf den beiden Gewindeteilen 7 und 8 und in den Gewindebohrungen 11 haben dieselbe Steigung.

Zu beiden Seiten der Spindel 3 sind zwei zylindrische Führungsstifte 5 und 6 vorgesehen, die in dazu passenden, paarweise miteinander fluchtenden, durchgehenden Bohrungen der beiden Körper 1 und 2 stecken. Die Führungsstifte 5 und 6 bilden Geradführungsmittel, welche die beiden Körper 1 und 2 unter Vermeidung einer Relativdrehung der beiden Körper 1 und 2 beim Verändern ihres Abstands entlang zweier zueinander paralleler Führungsachsen führen, welche im gezeichneten Beispiel mit den Längsachsen der Führungsstifte 5 und 6 zusammenfallen.

Nicht beide Führungsstifte 5 und 6 sind zwingend vorhanden. Geeignete Geradführungsmittel können prinzipiell auch durch die Spindel 3 selbst und durch einen einzigen, zur Spindel 3 parallelen Führungsstift gebildet werden, jedoch sind Ausführungsformen mit zwei Führungsstiften wegen einer symmetrischen Krafteinleitung der von der Spindel 3 ausgehenden Kraft in die beiden Körper 1 und 2 bevorzugt.

Prinzipiell ist es ferner auch möglich, anstelle einer Spindel 3 mit zwei Gewindeteilen 7 und 8 eine Spindel mit nur einem einzigen Gewindeteil zu verwenden und dabei die Spindel nur in einem der beiden Körper in eine Gewindebohrung zu drehen und die Spindel mit dem anderen Körper der Dehnschraube drehbar, aber unverschieblich, zu verbinden, insbesondere dadurch, dass man den Betätigungsteil der Spindel drehbar in einer Kammer eines der beiden Körper der Dehnschraube lagert, aus welcher Kammer der einzige Gewindeteil der Spindel herausragt und in die Gewindebohrung des anderen Körpers der Dehnschraube gedreht ist.

Im ersten Ausführungsbeispiel gemäß den Figuren 1 bis 8 hat der Betätigungsteil 4 zwei sich unter einem rechten Winkel schneidende Querbohrungen 13 und 14, die in den Figuren 1 bis 4 zu sehen sind. Zum Verdrehen der Spindel 3 kann in die Bohrung 13 oder 14 ein Verstellwerkzeug, beispielsweise ein Stift, eingeführt werden, den man als Hebel zum Verdrehen der Spindel 3 benutzen kann. Verdreht man den Betätigungsteil 4, ändert sich der Abstand der beiden Körper 1 und 2, die dabei auf den Führungsstiften 5 und 6 gleiten, sodass die beiden Körper 1 und 2 gerade geführt werden und eine Relativdrehung der beiden Körper 1 und 2 gegeneinander verhindert wird.

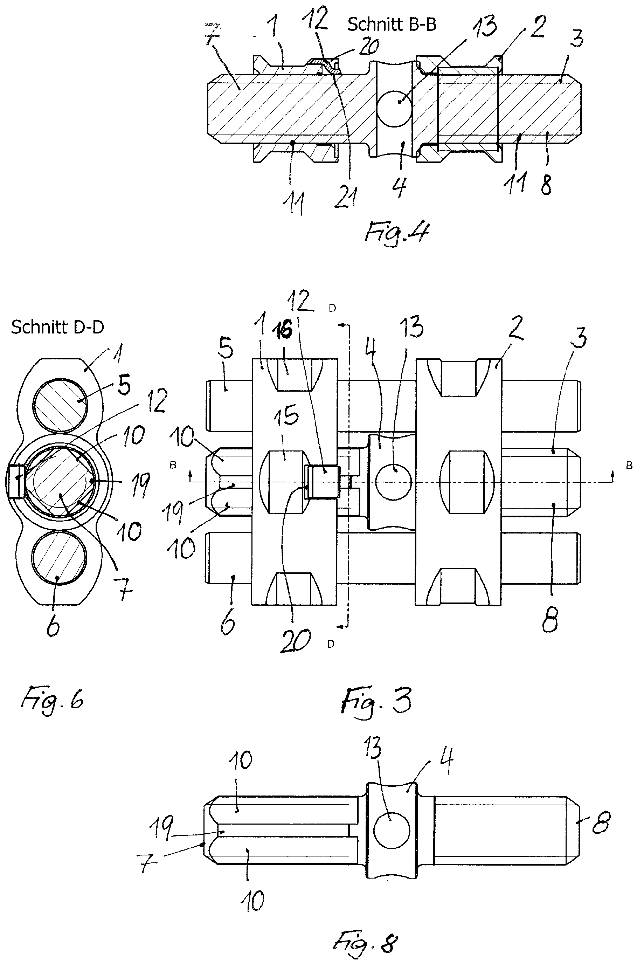

Damit sich die Dehnschraube im Mund eines Patienten, dem sie für eine kieferorthopädische Behandlung eingesetzt wurde, nicht von selbst verstellt, ist in der Dehnschraube eine Einrichtung ausgebildet, welche ein unbeabsichtigtes Verdrehen der Spindel 3 relativ zu den beiden Körpern 1, 2 in beiden Drehrichtungen der Spindel 3 unter den im Mund auftretenden Einwirkungen auf die Dehnschraube verhindert oder wenigstens erschwert. Zu diesem Zweck ist einer der beiden Gewindeteile, nämlich der erste Gewindeteil 7, auf voller Länge in der Weise abgeflacht, dass er bei Blick in Längsrichtung der Spindel 3 die Gestalt eines Quadrats mit abgerundeten Ecken hat, siehe insbesondere die Figuren 5 und 6. Die Gewindegänge des ersten Gewindeteils 7 erstrecken sich deshalb nicht mehr vollständig um diesen herum, sondern beschränken sich im Wesentlichen auf den Bereich der noch vorhandenen "Kanten" der durch das Abflachen des ersten Gewindeteils 7 entstandenen Gestalt eines Vierkants mit gerundeten "Kanten". Die Abflachungen 10 sind in den Figuren nicht maßstäblich dargestellt, sondern nur prinzipiell, um ihr Wirkungsprinzip zu verdeutlichen.

An wenigstens einem der beiden Körper 1 und 2, im gezeichneten Beispiel am Körper 1, befindet sich an dessen einem Ende, welches dem Betätigungsteil 4 zugewandt ist, ein federnder Fortsatz 12. Der federnde Fortsatz 12 ist im dargestellten Ausführungsbeispiel eine Blattfeder, welche mit einem ihrer beiden Enden in einer Nut 20 angeordnet ist, welche auf der Außenseite des Körpers 1 parallel zur Längsrichtung der Spindel 3 verläuft. Das in der Nut 20 des Körpers 1 liegende Ende der Blattfeder 12 ist fest mit dem Körper 1 verbunden, insbesondere durch Schweißen, Löten oder Kleben. Die Blattfeder 12 ist, wie in den Figuren 3 und 4 dargestellt, annähernd S-förmig gebogen und drückt mit ihrem freien Ende federnd auf den Gewindeteil 7 der Spindel 3. Das freie Ende der Blattfeder 12 hat, wie in Figur 4 dargestellt, eine dem Gewindeteil 7 zugewandte konvexe Oberfläche 21.

Die beiden Körper 1 und 2 der Dehnschraube unterscheiden sich nur geringfügig in der Kontur ihres dem Betätigungsteil 4 zugewandten Endes und darin, dass der erste Körper 1 die Nut 20 hat, in welcher das eine Ende der Blattfeder 12 angeordnet und fest mit dem Körper 1 verbunden ist.

Die Figuren 1 und 5 zeigen die Spindel 3 in einer Stellung, in welcher der Fortsatz 12 eine Abflachung 10 des ersten Gewindeteils 7 der Spindel 3 auf einer Mittellinie 18 berührt, welche in Figur 1 mit der Schnittlinie A-A zusammenfällt. Diese Stellung wird nachfolgend als Sperrstellung bezeichnet. Wenn man die Spindel 3 aus dieser Sperrstellung herausdrehen will, türmt sich der Rand der Abflachung 10 vor dem Fortsatz 12 auf, welcher der Drehung der Spindel 3 eine hemmende Federkraft entgegensetzt, die zunimmt, bis die nächste Rundung 19 des ersten Gewindeteils 7 den Fortsatz 12 erreicht. Diese Stellung der Spindel 3 ist in den Figuren 3 und 6 dargestellt und wird nachfolgend als Schaltstellung bezeichnet, weil aus dieser heraus die Spindel 3 rechtsherum oder linksherum in die nächste Sperrstellung gedreht werden kann.

Der Widerstand, der beim Verdrehen der Spindel 3 aus einer Sperrstellung in eine Schaltstellung überwunden werden muss, kann ein unbeabsichtigtes Verdrehen der Spindel 3 verhindern.

Bei dem in den Figuren 1 bis 8 dargestellten ersten Ausführungsbeispiel einer erfindungsgemäßen Dehnschraube gelangt die Spindel 3, ausgehend von einer Sperrstellung, durch eine Drehung um jeweils 90° in die nächste Sperrstellung, sodass der Abstand der beiden Körper 1 und 2 der Dehnschraube vom Kieferorthopäden durch Drehung der Spindel um jeweils 90° von einer Sperrstellung in die nächste Sperrstellung verändert werden kann, wobei die daraus folgende Veränderung des Abstandes der beiden Körper 1 und 2 von der Steigung des Gewindes der Spindel 3 abhängt.

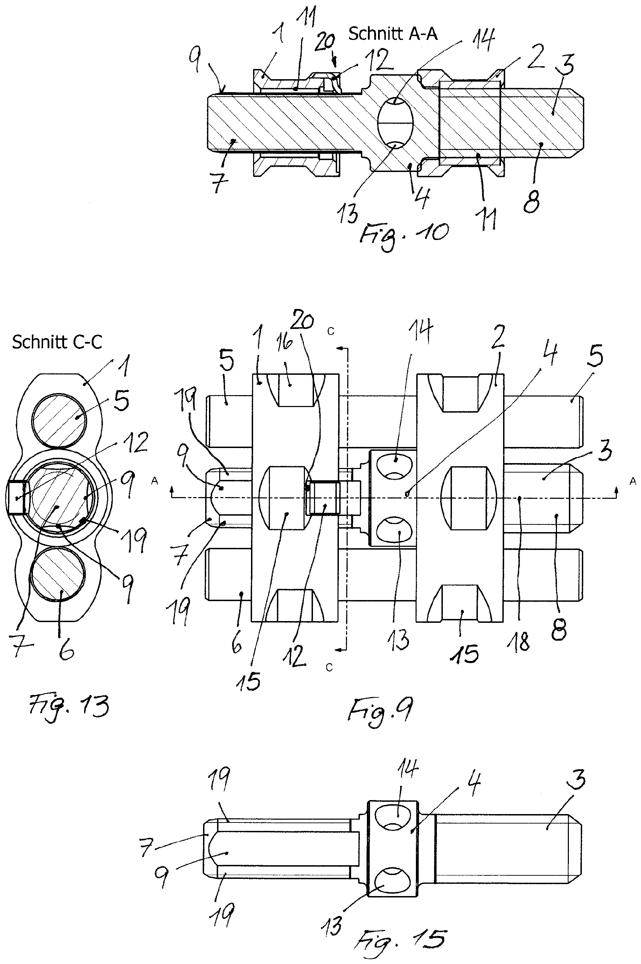

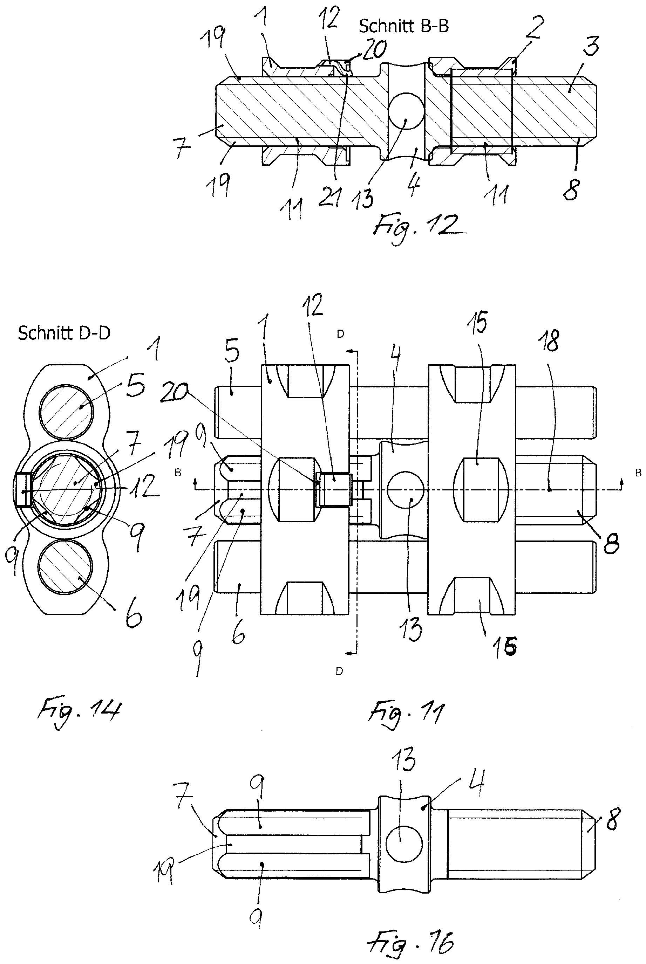

Das in den Figuren 9 bis 16 dargestellte zweite Ausführungsbeispiel einer erfindungsgemäßen Dehnschraube unterscheidet sich von dem in den Figuren 1 bis 8 dargestellten ersten Ausführungsbeispiel nur darin, dass anstelle von Abflachungen 10 des ersten Gewindeteils 7, die durch eine ebene Fläche begrenzt sind, am ersten Gewindeteil 7 durch konkave Flächen Ausnehmungen 9 ausgebildet sind, sodass der erste Gewindeteil 7 vier sich in dessen Längsrichtung erstreckende Ausnehmungen 9 aufweist, welche einander paarweise diametral gegenüberliegen und in welche ein am ersten Körpers 1 angebrachter federnder Fortsatz 12 eingreift. Die Art der Anbringung des Fortsatzes 12 am ersten Körper 1 ist dieselbe wie im ersten Ausführungsbeispiel. Wie im ersten Ausführungsbeispiel ist der Fortsatz 12 eine Blattfeder. Bei im Übrigen gleichen Abmessungen ist der Federweg des Fortsatzes 12 jedoch größer als im ersten Ausführungsbeispiel. Dadurch kann der Widerstand, den die Spindel 3 überwinden muss, wenn sie aus ihrer Sperrstellung (Figur 9) herausgedreht wird, größer sein als im ersten Ausführungsbeispiel. Infolgedessen ist bei einer Dehnschraube gemäß dem zweiten Ausführungsbeispiel ohne Schwierigkeit eine stärkere Hemmung der Spindel 3 erzielbar als bei einer Dehnschraube gemäß dem ersten Ausführungsbeispiel.

Abgesehen davon, dass im zweiten Ausführungsbeispiel am ersten Gewindeteil 7 Ausnehmungen 9 anstelle von Abflachungen 10 vorgesehen sind und die Blattfeder 12 einen längeren Federweg hat, stimmen die beiden Ausführungsbeispiele überein, sodass wegen der Einzelheiten des zweiten Ausführungsbeispiels auf die Beschreibung des ersten Ausführungsbeispiels zurückgegriffen werden kann.

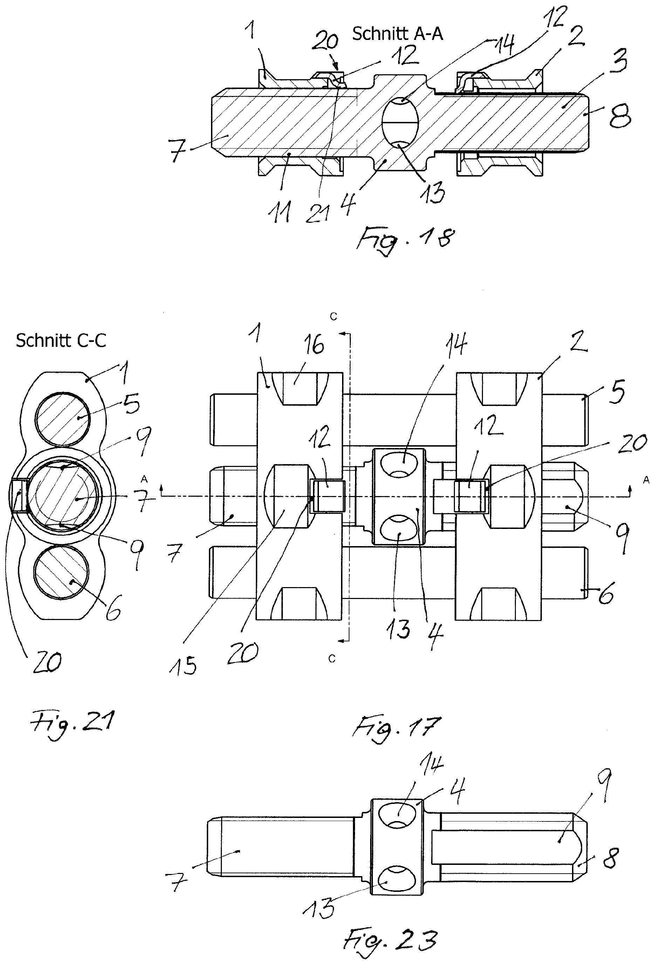

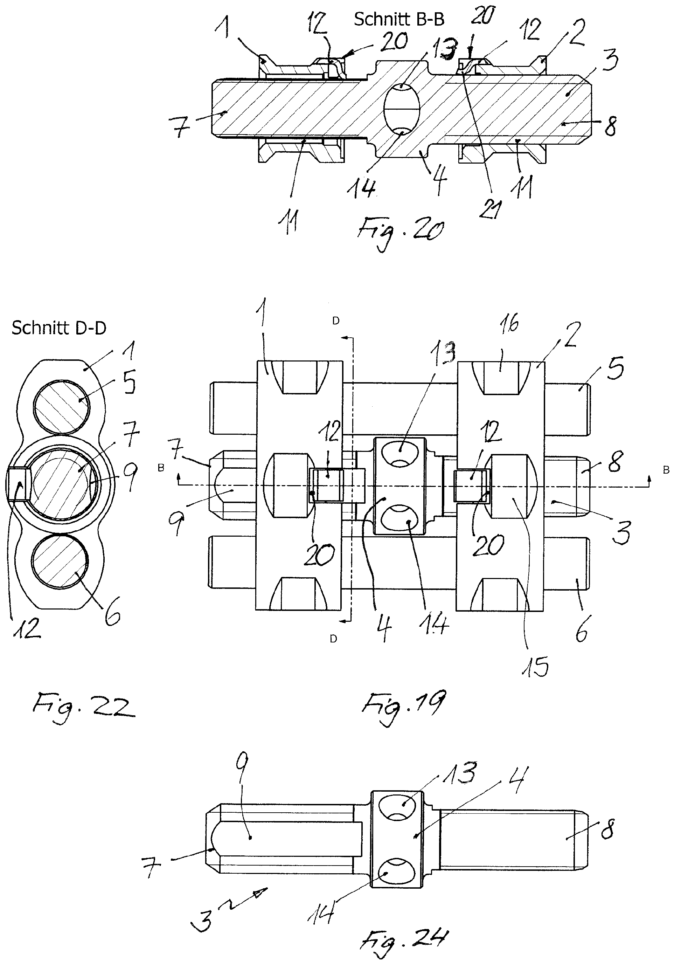

Das in den Figuren 17 bis 22 dargestellte dritte Ausführungsbeispiel einer erfindungsgemäßen Dehnschraube unterscheidet sich von dem zweiten Ausführungsbeispiel nur darin, dass an dem ersten Gewindeteil 7 nicht vier Ausnehmungen 9, sondern nur zwei einander diametral gegenüberliegende Ausnehmungen 9 ausgebildet sind, und dass zwei weitere einander diametral gegenüberliegende Ausnehmungen 9 an dem zweiten Gewindeteil 8 ausgebildet und so angeordnet sind, dass sie gegen die Ausnehmungen 9 im ersten Gewindeteil 7 in Umfangsrichtung um 90° versetzt sind. Hinzu kommt, dass nicht nur am ersten Körper 1, sondern auch im zweiten Körper 2 an deren Enden, welche dem Betätigungsteil 4 zugewandt sind, jeweils ein federnder Fortsatz 12 angebracht ist. Diese dritte Ausführungsform der Dehnschraube hat den Vorteil, dass auf beiden Gewindeteilen 7 und 8 mehr vom Gewinde erhalten geblieben ist als im ersten und zweiten Ausführungsbeispiel auf dem ersten Gewindeteil 7. Das Gewinde des ersten Gewindeteils 7 kann deshalb größere Kräfte aufnehmen als die Dehnschraube des zweiten Ausführungsbeispiels. Ein weiterer Vorteil besteht darin, dass beide Gewindeteile 7 und 8 ungefähr gleich belastet werden. Erhalten geblieben ist der Vorteil des ersten und zweiten Ausführungsbeispiels, dass die Spindel 3 von Sperrstellung zu Sperrstellung lediglich um 90° verdreht werden muss.

### Bezugszeichenliste

- 1: erster Körper
- 2: zweiter Körper
- 3: Spindel
- 4: Betätigungsteil
- 5: Geradführungsmittel, Führungsstift
- 6: Geradführungsmittel, Führungsstift
- 7: Gewindeteil
- 8: Gewindeteil
- 9: Ausnehmung
- 10: Abflachung
- 11: Gewindebohrung
- 12: Fortsatz
- 13: Querbohrung
- 14: Querbohrung
- 15: Vertiefung
- 16: Vertiefung
- 18: Mittellinie
- 19: Rundung
- 20: Nut
- 21: Konvexe Oberfläche

## Patentansprüche

1. Orthodontische Dehnschraube
mit wenigstens zwei Körpern (1, 2), deren gegenseitiger Abstand mittels einer Spindel (3) veränderbar ist, die an beiden Körpern (1, 2) angreift, wobei die Spindel (3) ein Betätigungsteil (4) aufweist, von welchem wenigstens ein Gewindeteil (7, 8) ausgeht, welcher in eine Gewindebohrung (11) eines der beiden Körper (1, 2) gedreht ist,
und wobei die Körper (1, 2) ein erstes Ende haben, welches dem Betätigungsteil (4) der Spindel (3) zugewandt ist, und ein zweites Ende haben, welches dem Betätigungsteil (4) der Spindel (3) abgewandt ist,
mit Geradführungsmitteln (5, 6), die mit beiden Körpern (1, 2) in Eingriff stehen und sie unter Vermeidung einer Relativdrehung der Körper (1, 2) beim Verändern ihres gegenseitigen Abstands entlang zweier zueinander paralleler Führungsachsen führen,
und mit einer Einrichtung zum Verhindern oder Erschweren eines unbeabsichtigten Verdrehens der Spindel (3) relativ zu den Körpern (1, 2),
wobei der wenigstens eine Gewindeteil (7, 8) der Spindel (3) wenigstens eine sich in deren Längsrichtung erstreckende und in radialer Richtung offene Ausnehmung (9) aufweist und wobei der Körper (1, 2),
in welchem der wenigstens eine Gewindeteil (7, 8) steckt, außen an seinem ersten Ende und / oder an seinem zweiten Ende einen federnden Fortsatz (12) hat, welcher gegen den wenigstens einen Gewindeteil (7, 8) gerichtet ist und in einer Stellung der Spindel (3), in welcher er der wenigstens einen Ausnehmung (9) zugewandt ist, in die Ausnehmung (9) ragt, wohingegen er in Stellungen der Spindel (3), in welchen er keiner Ausnehmung (9) zugewandt ist, federnd gegen das Gewinde des wenigstens einen Gewindeteils (7, 8) drückt.

2. Orthodontische Dehnschraube
mit wenigstens zwei Körpern (1, 2), deren gegenseitiger Abstand mittels einer Spindel (3) veränderbar ist, die an beiden Körpern (1, 2) angreift, wobei die Spindel (3) ein Betätigungsteil (4) aufweist, von welchem wenigstens ein Gewindeteil (7, 8) ausgeht, welcher in eine Gewindebohrung (11) eines der beiden Körper (1, 2) gedreht ist,
und wobei die Körper (1, 2) ein erstes Ende haben, welches dem Betätigungsteil (4) der Spindel (3) zugewandt ist, und ein zweites Ende haben, welches dem Betätigungsteil (4) der Spindel (3) abgewandt ist,
mit Geradführungsmitteln (5, 6), die mit beiden Körpern (1, 2) in Eingriff stehen und sie unter Vermeidung einer Relativdrehung der Körper (1, 2) beim Verändern ihres gegenseitigen Abstands entlang zweier zueinander paralleler Führungsachsen führen,
und mit einer Einrichtung zum Verhindern oder Erschweren eines unbeabsichtigten Verdrehens der Spindel (3) relativ zu den Körpern (1, 2),
wobei der wenigstens eine Gewindeteil (7, 8) der Spindel (3) wenigstens eine sich in deren Längsrichtung erstreckende Abflachung (10) aufweist und wobei
der Körper (1, 2), in welchem der wenigstens eine Gewindeteil (7, 8) steckt, außen an seinem ersten Ende und / oder an seinem zweiten Ende, einen federnden Forsatz (12) hat, welcher gegen den wenigstens einen Gewindeteil (7, 8) gerichtet ist und in Stellungen der Spindel (3), in welchen er keiner Abflachung (10) zugewandt ist federnd gegen das Gewinde des wenigstens einen Gewindeteils (7, 8) drückt, wohingegen er in Stellungen der Spindel (3), in welchen er gegen eine Abflachung (10) gerichtet ist, die Abflachung (10) nicht oder mit weniger Druck berührt als in den Stellungen, in welchen er keiner Abflachung (10) zugewandt ist.

3. Dehnschraube nach Anspruch 1 oder 2, **dadurch gekennzeichnet,**
**dass** der Fortsatz (12) den Gewindeteil (7, 8) der Spindel (3) in jeder ihrer Stellungen berührt.

4. Dehnschraube nach Anspruch 3, **dadurch gekennzeichnet, dass** der Fortsatz (12) in jeder Stellung der Spindel (3) federnd auf das Gewindeteil (7, 8) der Spindel (3) drückt.

5. Dehnschraube nach einem der vorstehenden Ansprüche, **dadurch gekennzeichnet, dass** der federnde Fortsatz (12) eine dem Gewindeteil (7, 8) der Spindel (3) zugewandte Oberfläche (21) hat, welche konvex ausgebildet ist.

6. Dehnschraube nach einem der vorstehenden Ansprüche, **dadurch gekennzeichnet, dass** die Erstreckung der Oberfläche, mit welcher der federnde Fortsatz (12) den Gewindeteil (7, 8) der Spindel (3) berührt, in Längsrichtung der Spindel (3) größer ist als die Steigung des Gewindes der Spindel (3).

7. Dehnschraube nach einem der vorstehenden Ansprüche, **dadurch gekennzeichnet, dass** der Fortsatz (12) eine Blattfeder ist.

8. Dehnschraube nach Anspruch 7, **dadurch gekennzeichnet, dass** ein Ende der Blattfeder (12) am äußeren Umfang des wenigstens einen Körpers (1, 2) angebracht ist.

9. Dehnschraube nach einem der vorstehenden Ansprüche, **dadurch gekennzeichnet, dass** sich die wenigstens eine Ausnehmung (9) bzw. Abflachung (10) über die gesamte Länge des wenigstens einen Gewindeteils (7, 8) erstreckt.

10. Dehnschraube nach einem der vorstehenden Ansprüche, **dadurch gekennzeichnet, dass** auf dem wenigstens einen Gewindeteil (7, 8) zwei oder vier Ausnehmungen (9) bzw. Abflachungen (10) vorhanden sind, welche einander paarweise diametral gegenüber liegen.

11. Dehnschraube nach Anspruch 10, **dadurch gekennzeichnet, dass** das wenigstens eine Gewindeteil (7, 8) ein Vierkant mit abgerundeten Kanten ist, in welchen das Gewinde ausgebildet ist.

12. Dehnschraube nach Anspruch 11, **dadurch gekennzeichnet, dass** sich der Gewinde des wenigstens einen Gewindeteils (7, 8) mit einer geringeren Tiefe der Gewindegänge wenigstens zu einem Teil auch in die wenigstens eine Ausnehmung (9) bzw. Abflachung (10) des wenigstens einen Gewindeteils (7, 8) erstreckt.

13. Dehnschraube nach einem der vorstehenden Ansprüche, **dadurch gekennzeichnet, dass** die Spindel (3) zwei Gewindeteile (7,8) hat, welche sich vom Betätigungsteil (4) ausgehend in einander entgegengesetzte Richtungen erstrecken und jeweils zwei einander diametral gegenüberliegende Ausnehmungen (9) bzw. Abflachungen (10) haben, wobei die Ausnehmungen (9) bzw. Abflachungen (10) auf dem einen Gewindeteil (7) relativ zu den Ausnehmungen (9) bzw. Abflachungen (10) auf dem anderen Gewindeteil (8) um die Längsachse der Spindel (3) um einen Umfangswinkel von 90° gegeneinander versetzt sind.

14. Dehnschraube nach einem der vorstehenden Ansprüche, **dadurch gekennzeichnet, dass** an beiden Körpern (1, 2) ein oder zwei federnde Fortsätze (12) vorgesehen sind.

15. Dehnschraube nach einem der vorstehenden Ansprüche, **dadurch gekennzeichnet, dass** am ersten und/oder zweiten Ende des Körpers (1, 2) zwei Fortsätze (12) in diametraler Anordnung vorhanden sind.

## Claims

1. An orthodontic expansion screw
comprising at least two bodies (1, 2), the mutual distance between which can be changed by means of a spindle (3), which engages both bodies (1, 2), wherein the spindle (3) has an activating part (4), from which at least one threaded part (7, 8) proceeds, and is turned into a threaded hole (11) of one of the two bodies (1, 2),
and wherein the bodies (1, 2) have a first end, which faces the activating part (4) of the spindle (3), and a second end, which faces away from the activating part (4) of the spindle (3),
with linear guiding means (5, 6), which engage both bodies (1, 2) and guide them along two mutually parallel guiding axes while preventing a relative rotation of the bodies (1, 2) given a change in their distance relative to each other,
and with a device for preventing or impeding an inadvertent twisting of the spindle (3) relative to the bodies (1, 2),
wherein the at least one threaded part (7, 8) of the spindle (3) has at least one recess (9) that extends in its longitudinal direction and is open in a radial direction, and wherein the body (1, 2) in which the at least one threaded part (7, 8) is inserted has an elastic extension (12) externally on its first end and/or on its second end, which is directed against the at least one threaded part (7, 8), and protrudes into the recess (9) in a position of the spindle (3) in which it faces the at least one recess (9), whereas it elastically presses against the thread of the at least one threaded part (7, 8) in positions of the spindle (3) in which it does not face any recess (9).

2. An orthodontic expansion screw
comprising at least two bodies (1, 2), the mutual distance between which can be changed by means of a spindle (3), which engages both bodies (1, 2), wherein the spindle (3) has an activating part (4), from which at least one threaded part (7, 8) proceeds, and is turned into a threaded hole (11) of one of the two bodies (1, 2),
and wherein the bodies (1, 2) have a first end, which faces the activating part (4) of the spindle (3), and a second end, which faces away from the activating part (4) of the spindle (3),
with linear guiding means (5, 6), which engage both bodies (1, 2) and guide them along two mutually parallel guiding axes while preventing a relative rotation of the bodies (1, 2) given a change in their distance relative to each other,
and with a device for preventing or impeding an inadvertent twisting of the spindle (3) relative to the bodies (1, 2),
wherein the at least one threaded part (7, 8) of the spindle (3) has at least one flattened region (10) that extends in its longitudinal direction, and wherein the body (1, 2) in which the at least one threaded part (7, 8) is inserted has an elastic extension (12) externally on its first end and/or on its second end, which is directed against the at least one threaded part (7, 8), and elastically presses against the thread of the at least one threaded part (7, 8) in positions of the spindle (3) in which it does not face any flattened region (10), whereas it does not contact the flattened region (10) or does so with less pressure in positions of the spindle (3) in which it is directed against a flattened region (10) than in the positions in which it does not face any flattened region (10).

3. The expansion screw according to claim 1 or 2, **characterized in that** the extension (12) contacts the threaded part (7, 8) of the spindle (3) in each of its positions.

4. The expansion screw according to claim 3, **characterized in that** the extension (12) elastically presses against the threaded part (7, 8) of the spindle (3) in each position of the spindle (3).

5. The expansion screw according to any one of the preceding claims, **characterized in that** the elastic extension (12) has a surface (21) that faces the threaded part (7, 8) of the spindle (3), and is convex in design.

6. The expansion screw according to any one of the preceding claims, **characterized in that** the extension of the surface with which the elastic extension (12) contacts the threaded part (7, 8) of the spindle (3) is greater than the pitch of the thread of the spindle (3) in the longitudinal direction of the spindle (3).

7. The expansion screw according to any one of the preceding claims, **characterized in that** the extension (12) is a leaf spring.

8. The expansion screw according to claim 7, **characterized in that** one end of the leaf spring (12) is fastened to the outer periphery of the at least one body (1, 2).

9. The expansion screw according to any one of the preceding claims, **characterized in that** the at least one recess (9) or flattened region (10) extends over the entire length of the at least one threaded part (7, 8).

10. The expansion screw according to any one of the preceding claims, **characterized in that** two or four recesses (9) or flattened regions (10) are present on the at least one threaded part (7, 8), and lie diametrically opposite each other in pairs.

11. The expansion screw according to claim 10, **characterized in that** at least one threaded part (7, 8) is a square with rounded edges, in which the threaded is formed.

12. The expansion screw according to claim 11, **characterized in that** the thread of the at least one threaded part (7, 8) also extends at least in part into the at least one recess (9) or flattened region (10) of the at least one threaded part (7, 8).

13. The expansion screw according to any one of the preceding claims, **characterized in that** the spindle (3) has two threaded parts (7, 8), which extend in mutually opposite directions proceeding from the activating part (4), and each have two recesses (9) or flattened regions (10) lying diametrically opposite each other, wherein the recesses (9) or flattened regions (10) on the one threaded part (7) are offset relative to the recesses (9) or flattened regions (10) on the other threaded part (8) by a circumferential angle of 90° around the longitudinal axis of the spindle (3).

14. The expansion screw according to any one of the preceding claims, **characterized in that** one or two elastic extensions (12) are provided on both bodies (1, 2).

15. The expansion screw according to any one of the preceding claims, **characterized in that** two diametrically arranged extensions (12) are present on the first and/or second end of the body (1, 2).

## Revendications

1. Vis d'expansion orthodontique,
avec au moins deux corps (1, 2), dont l'écart mutuel est variable à l'aide d'une broche (3) qui s'engage avec les deux corps (1, 2), où la broche (3) comprenant une pièce de manoeuvre (4) à partir de laquelle part au moins une pièce filetée (7, 8) qui est vissée dans un taraudage (11) de l'un des deux corps (1, 2),
et où les corps (1, 2) ayant une première extrémité, laquelle fait face à la pièce de manoeuvre (4) de la broche (3) et ayant une deuxième extrémité, laquelle est opposée à la pièce de manoeuvre (4) de la broche (3),
avec des moyens de guidage rectiligne (5, 6), qui sont en engagement avec les deux corps (1, 2) et qui en évitant une rotation relative des corps (1, 2) lors de la variation de leur écart mutuel, les guident le long de deux axes de guidage parallèles l'un à l'autre,
et avec un dispositif destiné à empêcher ou à gêner une rotation intempestive de la broche (3) par rapport aux corps (1, 2),
où l'au moins une pièce filetée (7, 8) de la broche (3) comportant au moins un évidement (9) s'étendant dans la direction longitudinale de celle-ci et ouvert en direction radiale, et où le corps (1, 2), dans lequel est insérée l'au moins une pièce filetée (7, 8), ayant à l'extérieur, sur sa première extrémité et / ou sur sa deuxième extrémité, un prolongement (12) élastique, lequel est orienté contre l'au moins une pièce filetée (7, 8) et saillit dans l'évidement (9) dans une position de la broche (3), dans laquelle il fait face à l'au moins un évidement (9), alors qu'en revanche, il appuie de manière élastique contre le filetage de l'au moins une pièce filetée (7, 8) dans des positions de la broche (3), dans lesquelles il ne fait face à aucun évidement (9).

2. Vis d'expansion orthodontique
avec au moins deux corps (1, 2), dont l'écart mutuel est variable à l'aide d'une broche (3), qui s'engage avec les deux corps (1, 2), où la broche (3) comportant une pièce de manoeuvre (4) à partir de laquelle part au moins une pièce filetée (7, 8), laquelle est vissée dans un taraudage (11) de l'un des deux corps (1, 2),
et où les corps (1, 2) ayant une première extrémité, laquelle fait face à la pièce de manoeuvre (4) de la broche (3) et ayant une deuxième extrémité, laquelle est opposée à la pièce de manoeuvre (4) de la broche (3),
avec des moyens de guidage rectiligne (5, 6), qui sont en engagement avec les deux corps (1, 2) et qui en évitant une rotation relative des corps (1, 2) lors de la variation de leur écart mutuel, les guident le long de deux axes de guidage parallèles l'un à l'autre,
et avec un dispositif destiné à empêcher ou à gêner une rotation intempestive de la broche (3) par rapport aux corps (1, 2),
où l'au moins une pièce filetée (7, 8) de la broche (3) comportant au moins un méplat (10) s'étendant dans la direction longitudinale de celle-ci, et où le corps (1, 2), dans lequel est insérée l'au moins une pièce filetée (7, 8), ayant à l'extérieur, sur sa première extrémité et / ou sur sa deuxième extrémité, un prolongement (12) élastique, lequel est orienté contre l'au moins une pièce filetée (7, 8) et appuie de manière élastique contre le filetage de l'au moins une pièce filetée (7, 8) dans des positions de la broche (3), dans lesquelles il ne fait face à aucun méplat (10), alors qu'en revanche, dans des positions de la broche (3), dans lesquelles il est dirigé contre un méplat (10), ne touche pas le méplat (10) ou le touche avec une pression moindre que dans des positions, dans lesquelles il ne fait face à aucun méplat (10).

3. Vis d'expansion selon la revendication 1 ou 2, **caractérisée en ce que** le prolongement (12) touche la pièce filetée (7, 8) de la broche (3) dans chacune de ses positions.

4. Vis d'expansion selon la revendication 3, **caractérisée en ce que** dans chaque position de la broche (3), le prolongement (12) appuie de manière élastique sur la pièce filetée (7, 8) de la broche (3).

5. Vis d'expansion selon l'une quelconque des revendications précédentes, **caractérisée en ce que** le prolongement (12) élastique a une surface (21) faisant face à la pièce filetée (7, 8) de la broche (3), qui est conçue sous forme convexe.

6. Vis d'expansion selon l'une quelconque des revendications précédentes, **caractérisée en ce que** l'expansion de la surface, par laquelle le prolongement (12) élastique touche la pièce filetée (7, 8) de la broche (3), est plus grande dans la direction longitudinale de la broche (3) que le pas de filetage de la broche (3).

7. Vis d'expansion selon l'une quelconque des revendications précédentes, **caractérisée en ce que** le prolongement (12) est un ressort à lame.

8. Vis d'expansion selon la revendication 7, **caractérisée en ce qu'**une extrémité du ressort à lame (12) est montée sur le périphérie extérieure de l'au moins un corps (1, 2).

9. Vis d'expansion selon l'une quelconque des revendications précédentes, **caractérisée en ce que** l'au moins un évidement (9) ou méplat (10) s'étend sur toute la longueur de l'au moins une pièce filetée (7, 8).

10. Vis d'expansion selon l'une quelconque des revendications précédentes, **caractérisée en ce que** sur l'au moins une pièce filetée (7, 8) sont présents deux ou quatre évidements (9) ou méplats (10), qui par paire, sont diamétralement situés à l'opposée l'un de l'autre.

11. Vis d'expansion selon la revendication 10, **caractérisée en ce que** l'au moins une pièce filetée (7, 8) est un carré à arêtes arrondies, dans lesquelles est conçu le filetage.

12. Vis d'expansion selon la revendication 11, **caractérisée en ce que** le filetage de l'au moins une pièce filetée (7, 8) s'étend avec une profondeur de filetage moindre au moins en partie dans l'au moins un évidement (9) ou méplat (10) de l'au moins une pièce filetée (7, 8).

13. Vis d'expansion selon l'une quelconque des revendications précédentes, **caractérisée en ce que** la broche (3) a deux pièces filetées (7,8), lesquelles en partant de la pièce de manoeuvre (4) s'étendent dans des directions opposées et ont chacune deux évidements (9) ou méplats (10) diamétralement opposés l'un à l'autre, où les évidements (9) ou méplats (10) sur l'une pièce filetée (7) étant décalés par rapport aux évidements (9) ou méplats (10) sur l'autre pièce filetée (8) autour de l'axe longitudinal de la broche (3) de la valeur d'un angle périphérique de 90°.

14. Vis d'expansion selon l'une quelconque des revendications précédentes, **caractérisée en ce que** sur les deux corps (1, 2) est ou sont prévu(s) un ou deux prolongement(s) (12).

15. Vis d'expansion selon l'une quelconque des revendications précédentes, **caractérisée en ce que** sur la première et / ou la deuxième extrémité du corps (1, 2), deux prolongements (12) sont présents selon un agencement diamétral.
